# FASCICULE DE BREVET EUROPEEN

(11) **EP 0 986 943 B1**
(45) Date de publication et mention de la délivrance du brevet: **18.02.2004**
(21) Numéro de dépôt: 99440245.1
(22) Date de dépôt: 08.09.1999
(51) Int. Cl.: A01B 3/46, A01B 69/00

(54) **Machine agricole**
Landwirtschaftliche Maschine
Agricultural machine

(30) Priorité: 16.09.1998 FR 9811765
(43) Date de publication de la demande: 22.03.2000
(73) Titulaire: Kuhn-Huard S.A., 44142 Chateaubriant (FR)
(72) Inventeur: Perret, Louis, 44110 Chateaubriant (FR)
(74) Mandataire: Andres, Jean-Claude

(56) Documents cités:
- WO-A-96/38032
- FR-A- 1 567 308
- FR-A- 2 560 478
- FR-A- 2 658 694
- FR-A- 2 662 567

## Description

La présente invention se rapporte au domaine technique général des machines agricoles du type semi-portées ou traînées. Ces machines agricoles sont supportées, au moins partiellement, par au moins une roue, laquelle (lesquelles) roue(s) peut (peuvent), dans certains cas, être avantageusement orientée(s) par rapport au châssis de ladite machine agricole. Pour ces machines agricoles qui présentent en général une grande longueur, il est en effet important que la (les) roue(s) soit (soient) susceptible(s) de prendre diverses orientations correspondant à des déplacements en ligne droite, à des virages à gauche ou à des virages à droite. L'orientation de la (des) roue(s) permet ainsi de faciliter les différentes manoeuvres avec la machine agricole.

L'orientation de la (des) roue(s) revêt une grande importance, dans la mesure où une parfaite maniabilité de la machine agricole est recherchée, par exemple pour améliorer la conduite et gagner du temps dans les fourrières.

La présente invention trouve tout particulièrement son application dans le domaine des charrues semi-portées ou traînées, réversibles ou non.

Il est déjà connu de réaliser une machine agricole comportant :
- un châssis s'appuyant sur au moins une roue, ladite (lesdites) roue(s) étant liée(s) à un support de roue (s) lui-même lié directement au châssis ou via un bâti porteur,
- un mécanisme d'orientation de ladite (desdites) roue(s) par rapport au châssis, ledit mécanisme d'orientation comprenant des moyens hydrauliques connectés à un circuit hydraulique destiné à être alimenté par une source hydraulique munie d'au moins un distributeur, et
- au moins un organe de commande permettant de piloter le mécanisme d'orientation par l'intermédiaire dudit circuit hydraulique.

On connaît ainsi, par l'intermédiaire du document **FR-A- 2 376 606**, un mécanisme de direction automatique pour le train de roues arrière d'instruments agricoles réversibles à retournement hydraulique. Ce mécanisme comprend notamment un vérin hydraulique double effet. Ce dernier présente un piston occupant une position centrale dans le cylindre du vérin pour définir une orientation du train de roues en ligne droite ou parallèle au sens de traction. Le mécanisme décrit permet d'obtenir un ajustement automatique du train de roues suite à un retournement de l'instrument agricole ou suite à un changement de direction du véhicule par lequel l'instrument agricole est tracté. Cette position centrale du piston semble présenter un désavantage sur le plan de la stabilité pour des instruments agricoles longs.

En effet, une déviation angulaire minime peut provoquer un déport ou un balayage important de l'extrémité arrière de l'instrument agricole, ce qui peut s'avérer dangereux pour le transport sur route. A titre d'exemple, pour une charrue à douze corps, une déviation angulaire de un degré du train de roues provoque un déport latéral de trente centimètres de l'extrémité arrière de la machine, et cinq degrés d'erreur provoquent un déport latéral de cent cinquante centimètres.

Ainsi, une variation de pression dans le circuit hydraulique ou un déplacement du piston par rapport à sa position centrale dans le cylindre du vérin hydraulique double effet ne permet pas, a priori, de définir et de garantir un positionnement des roues constant et stable dans le sens de traction de l'instrument d'une machine agricole.

Par ailleurs, un actionnement accidentel ou mal contrôlé des moyens permettant d'ajuster l'orientation d'un tel train de roues se répercute quasi instantanément sur la trajectoire de l'extrémité arrière de l'instrument agricole. Ce dernier peut alors être soumis à une oscillation latérale par rapport à la direction d'avancement, d'autant plus importante que la vitesse d'avancement est grande. Ceci va à l'encontre d'une amélioration de la sécurité liée au transport sur routes de machines ou d'instruments agricoles.

L'objet de la présente invention vise à remédier aux inconvénients de l'état de la technique et à réaliser une machine agricole pourvue d'un mécanisme d'orientation de sa (ses) roue(s) permettant d'assurer une position de ladite (desdites) roue(s) parallèle au sens de traction et stable, en travail et en transport sur route, tout en conférant à ladite machine agricole une maniabilité satisfaisante et ce en travail ou en transport sur route.

Un objet complémentaire de la présente invention vise à rendre la position de la (des) roue(s) parallèle au sens de traction prioritaire pour rendre inopérantes manipulations accidentelles d'un organe de commande agissant sur l'orientation de ladite (desdites) roue(s).

Les objets assignés à la présente invention sont atteints à l'aide d'une machine agricole comportant :
- un châssis s'appuyant sur au moins une roue, ladite (lesdites) roue(s) étant liée(s) à un support de roue (s) lui-même lié directement au châssis ou via un bâti porteur,
- un mécanisme d'orientation de ladite (desdites) roue(s) par rapport au châssis, ledit mécanisme d'orientation comprenant des moyens hydrauliques connectés à un circuit hydraulique destiné à être alimenté par une source hydraulique munie d'au moins un distributeur, et
- au moins un organe de commande permettant de piloter le mécanisme d'orientation par l'intermédiaire dudit circuit hydraulique,
caractérisée en ce que les moyens hydrauliques, comprenant au moins un vérin hydraulique, coopèrent avec une butée mécanique liée au châssis ou au bâti porteur, et qu'un desdits vérins est en appui contre ladite butée mécanique pour déterminer une position de la (des) roue(s) parallèle(s) au sens de traction de la machine agricole durant le transport.

D'autres caractéristiques et avantages de l'invention ressortiront de la description détaillée figurant ci-après faite en référence aux dessins annexés, donnés à titre d'exemple non limitatif et dans lesquels :
- la **figure 1** représente une vue latérale globale d'un exemple de réalisation d'une machine agricole conforme à l'invention,
- la **figure 2** représente une vue partielle, en perspective, d'un chariot de la machine agricole représentée à la figure 1,
- la **figure 3** représente une vue de dessus partielle du chariot représenté à la figure 2,
- les **figures 4, 5 et 6** représentent des vues schématiques d'un mécanisme d'orientation de la machine agricole conforme à l'invention et représentée aux figures 1 à 3.

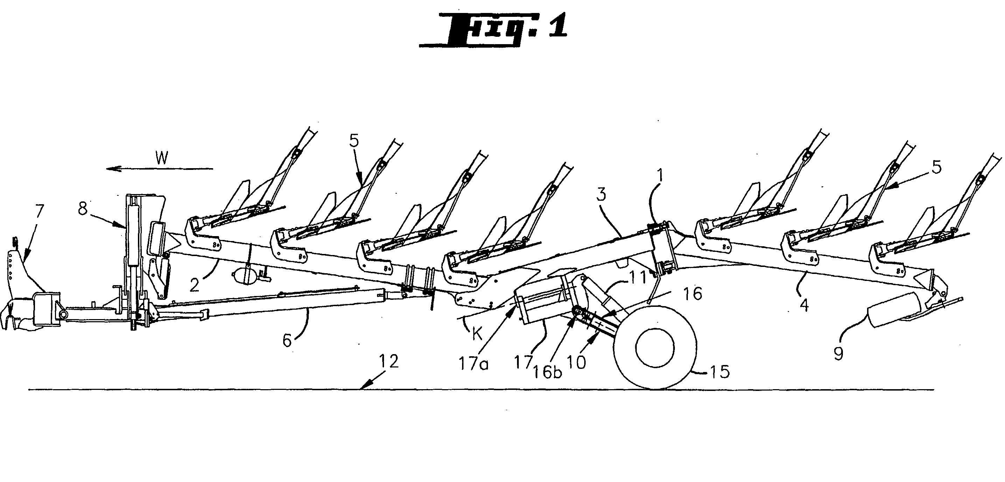

La figure 1 représente un exemple d'application pour l'objet de cette invention. La machine agricole représentée est une charrue réversible semi-portée susceptible d'être attelée à un tracteur.

La charrue comporte un châssis réalisant une poutre (1) avec un tronçon avant (2), un tronçon intermédiaire (3) et un tronçon arrière (4). Le tronçon intermédiaire (3) relie les tronçons avant (2) et arrière (4) lesquels supportent des corps de labour (5). Le tronçon avant (2) est associé à un timon (6) se prolongeant vers un système d'attelage (7). L'extrémité avant du timon (6) et l'extrémité avant du tronçon avant (2) sont reliées par l'intermédiaire d'un mécanisme de retournement (8).

La figure 1 représente la charrue dans une position de transport dans laquelle les corps de labour (5) s'étendent sensiblement horizontalement et sur le dessus de la poutre (1). Avantageusement, le tronçon arrière (4) est pourvu d'une roue de jauge (9), non utilisée en position de transport, mais servant à déterminer, au moins en partie, la profondeur de travail des corps de labour (5) correspondants.

Le tronçon intermédiaire (3) est monté sur un chariot (10), et ce de manière à pouvoir pivoter la poutre (1) à droite et à gauche pour le labour. Le chariot (10) est de préférence associé à un vérin de relevage (11) permettant d'abaisser ou de relever la poutre (1) et les corps de labour (5) par rapport au sol (12).

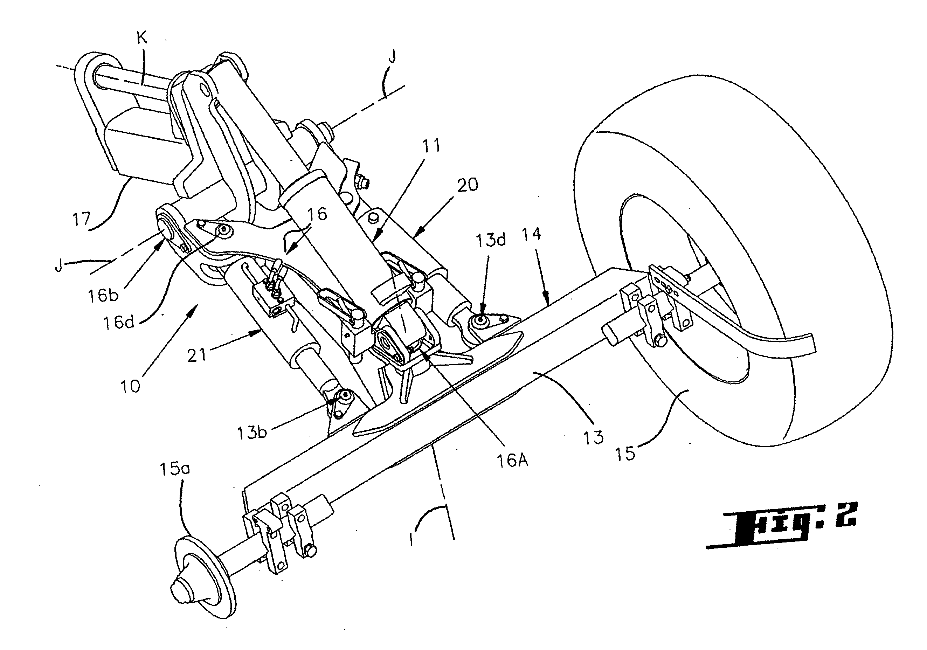

La figure 2 représente une vue partielle, en perspective, du chariot (10). Celui-ci comprend un essieu rigide (13) sur lequel sont montées deux roues (15) à l'aide de moyeux (15a) respectifs. Les moyeux (15a) sont fixés sur l'essieu (13) par tous moyens connus. L'essieu (13) qui constitue un support de roues (14), est monté pivotant autour d'un axe (I) dirigé vers la haut, de préférence sensiblement vertical, sur une extrémité d'un bâti porteur (16) que comporte également le chariot (10), grâce à une articulation (16a). Le chariot (10) est lié au tronçon intermédiaire (3) de la poutre (1) au moyen d'un élément de liaison (17) articulé sur l'autre extrémité du bâti porteur (16). L'élément de liaison (17) est susceptible de pivoter par rapport au bâti porteur (16) à l'aide d'une articulation (16b) d'axe (J) sensiblement horizontal et transversal par rapport au sens de traction (w), et ce sous l'effet d'un raccourcissement ou d'une élongation du vérin de relevage (11). La poutre (1) est avantageusement montée sur l'élément de liaison (17) par l'intermédiaire notamment d'une articulation (17a) d'axe (K) situé dans le plan de symétrie vertical du chariot (10). L'articulation (17a) d'axe (K) permet de basculer la poutre (1) vers la gauche et vers la droite pour des travaux de labour, en passant par une position centrale utilisée pour le transport de la charrue. Le bâti porteur (16) présente avantageusement des extrémités en forme de U pour réaliser les articulations (16a, 16b) lesquelles sont avantageusement du type cylindrique.

La machine agricole conforme à l'invention comprend également un mécanisme (18) d'orientation desdites roues (15). Le mécanisme d'orientation (18) comprend des moyens hydrauliques (18a) connectés à un circuit hydraulique (18b). Les moyens hydrauliques (18a) coopèrent avec une butée mécanique (23) solidaire du bâti porteur (16) pour déterminer une position des roues (15) parallèle au sens de traction (w) de la machine agricole.

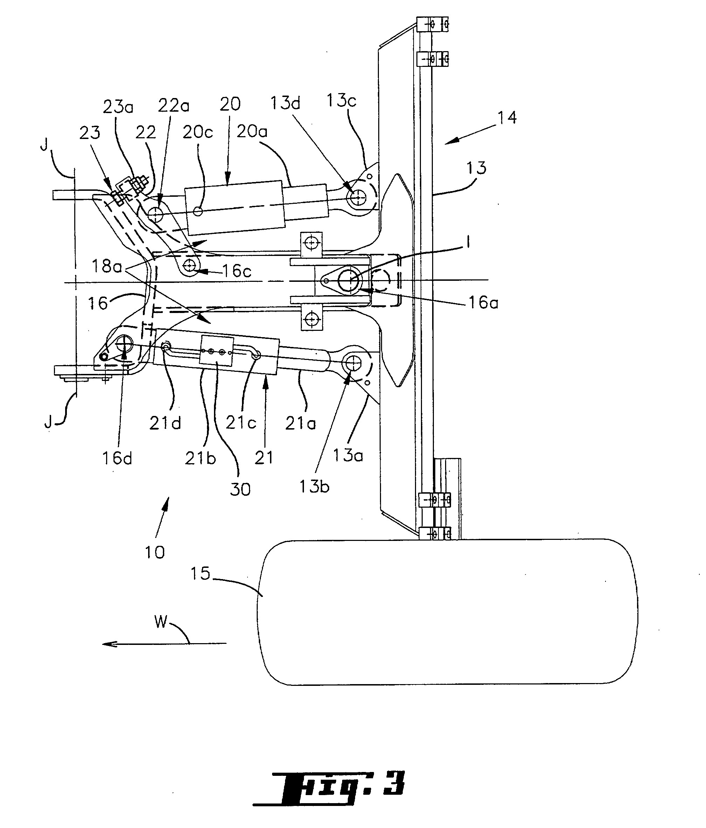

Les moyens hydrauliques (18a) comprennent tout d'abord un premier vérin hydraulique (20) articulé entre le support de roues (14) (essieu (13)) et une bielle (22) montée pivotante sur le bâti porteur (16) au moyen d'une articulation (16c) d'axe géométrique au moins sensiblement parallèle à l'axe (I) de l'articulation (16a) liant le support de roues (14) au bâti porteur (16). Les moyens hydrauliques (18a) comprennent ensuite un deuxième vérin hydraulique (21) articulé entre le bâti porteur (16) et le support de roues (14). Sur les différentes figures 3 à 6, on voit que le premier vérin hydraulique (20) agit d'un côté de l'articulation (16a) et que le deuxième vérin hydraulique (21) agit de l'autre côté de ladite articulation (16a). Le premier vérin hydraulique (20) est en appui contre la butée mécanique (23), notamment lorsque lesdites roues (15) sont parallèles au sens de traction (w) de la machine agricole. Comme également visible sur les figures 3 à 6, le premier vérin hydraulique (20) est un vérin simple effet tandis que le deuxième vérin hydraulique (21) est un vérin double effet.

La figure 3 représente une vue de dessus partielle du chariot (10) représenté à la figure 2. Comme visible, le chariot (10) est pourvu dudit mécanisme d'orientation (18) comprenant le premier vérin hydraulique (20) à simple effet et le deuxième vérin hydraulique (21) à double effet positionnés de part et d'autre du bâti porteur (16). Le deuxième vérin hydraulique (21) est articulé entre une pièce (13a) solidaire de l'essieu (13), et le bâti porteur (16). Le deuxième vérin hydraulique (21) présente donc une tige (21a) dont une extrémité est montée sur une articulation (13b) de la pièce (13a), et dont l'autre extrémité sert de piston à l'intérieur du cylindre (21b) dudit deuxième vérin hydraulique (21) de sorte à former deux chambres (21f, 21 g). L'autre extrémité du deuxième vérin hydraulique (21) est montée sur une articulation (16d) du bâti porteur (16). Chaque chambre (21f, 21 g) présente un orifice (21 d, 21 c) correspondant destiné à être connecté au circuit hydraulique (18b).

Le premier vérin hydraulique (20), quant à lui, comprend une tige (20a) articulée sur une pièce (13c) solidaire de l'essieu (13), et un cylindre formant la chambre (20b) et dont l'extrémité est articulée sur la bielle (22) au moyen d'une articulation (22a). La chambre (20b) est reliée au circuit hydraulique (18b) via un orifice (20c).

Le mécanisme d'orientation (18) comprend également la butée mécanique (23) contre laquelle la bielle (22) est susceptible de venir en appui. Le montage du premier vérin hydraulique (20) sur la bielle (22) lui permet d'être déplacé sensiblement longitudinalement par rapport au bâti porteur (16) et ce, consécutivement à un pivotement de l'essieu (13) autour de l'axe (I).

Le premier vérin hydraulique (20) est d'une part en extension maximale et d'autre part en appui (directement ou via la bielle (22)) contre la butée mécanique (23) pour déterminer la position des roues (15) parallèle au sens de traction (w) de la machine agricole conforme à l'invention.

En outre, le circuit hydraulique (18b) est conçu pour mettre sous pression toutes les chambres (20b, 21f, 21g) des deux vérins hydrauliques (20, 21) de manière à déterminer la position des roues (15) parallèle au sens de traction (w) de la machine agricole.

La position du chariot (10) correspondant à un déplacement selon le sens de traction (w) est donc obtenue, selon l'invention, avec une élongation maximale du premier vérin hydraulique (20) et un appui de celui-ci (directement ou via la bielle (22)) sur la butée mécanique (23). Avantageusement, la butée mécanique (23) est réglable pour ajuster avec précision la position des roues (15) parallèle au sens de traction (w) de la machine agricole. Un tel réglage permet en effet d'ajuster l'orientation de l'essieu (13), et en particulier l'avancée de la machine agricole en ligne droite selon la direction de traction (w).

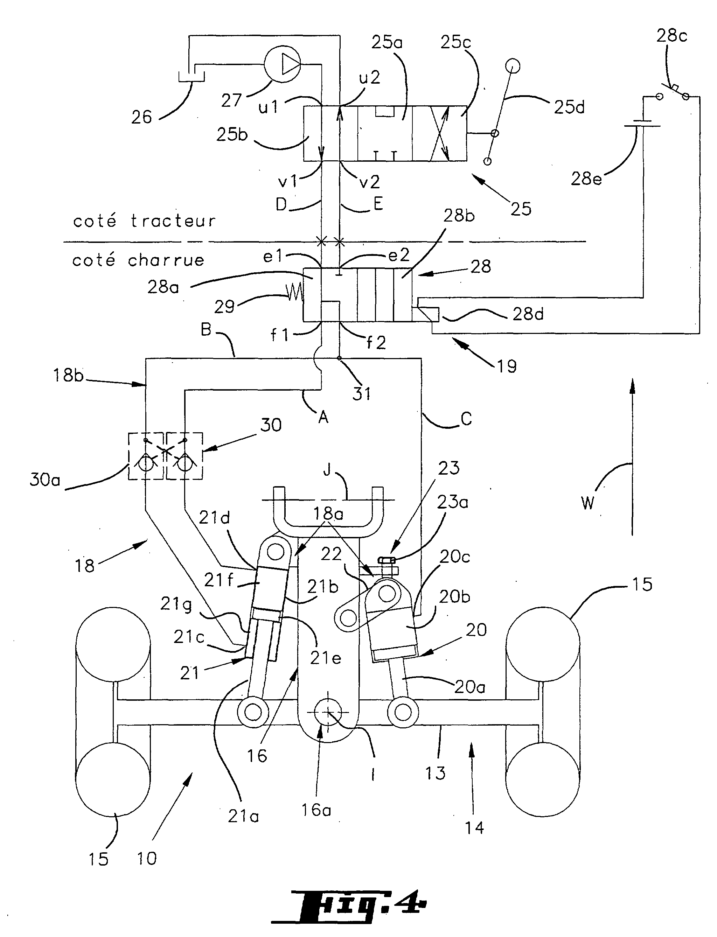

Les figures 4, 5 et 6 représentent schématiquement le chariot (10) dans diverses positions, ainsi que les moyens hydrauliques (18a) connectés au circuit hydraulique (18b) qui est destiné à être alimenté par une source hydraulique (25 - 26 - 27) comprenant un réservoir (26), une pompe (27) et au moins un distributeur (25). Une telle source hydraulique (25 - 26 - 27) est en général disponible sur le véhicule tractant la machine agricole. Il pourrait cependant également être prévu qu'elle fasse partie partiellement ou totalement de ladite machine agricole.

La machine agricole conforme à l'invention comprend en outre au moins un organe de commande (19) permettant de piloter le mécanisme d'orientation (18) par l'intermédiaire du circuit hydraulique (18b). Cet organe de commande (19) permet aux roues (15) de prendre une position différente de la position parallèle au sens de traction (w) de la machine agricole. Il comprend notamment un électrodistributeur (28). C'est en actionnant cet organe de commande (19), que l'on permet à l'essieu (13) de prendre une orientation différente de celle correspondant au déplacement selon le sens de traction (w) schématisée sur la figure 4. Cette orientation dépendra du sens du flux d'huile fourni par la source hydraulique (25 - 26 - 27), sens qui est défini par le distributeur (25). Le distributeur (25) qui peut être placé dans trois positions (25a, 25b, 25c), comprend deux entrées (u1, u2) et deux sorties (v1, v2).

L'électrodistributeur (28), quant à lui, peut être placé dans deux positions (28a, 28b) et comprend deux entrées (el, e2) et deux sorties (f1, f2). Cet électrodistributeur (28) fait l'interface entre le circuit hydraulique (18b), lequel est constitué de conduites (A, B et C) servant à alimenter les vérins hydrauliques (20, 21), et la source hydraulique (25 - 26 - 27), et plus précisément le distributeur (25) de celle-ci. A cet effet, l'électrodistributeur (28) est lié au distributeur (25) par des conduites (D, E).

Le distributeur (25) et l'électrodistributeur (28) sont respectivement commandés par un levier (25d) et un interrupteur (28c).

La position de repos (25a) du distributeur (25) isole le circuit hydraulique (18b) de la source hydraulique (25 - 26 - 27) et place la pompe (27) en communication avec le réservoir (26) (entrées (u1, u2) en communication et sorties (v1, v2) condamnées).

Le levier (25d) permet de sélectionner les trois positions (25a, 25b, 25c) du distributeur (25) et l'interrupteur (28c) permet de choisir l'une des deux positions (28a, 28b) de l'électrodistributeur (28). Ce dernier comprend à cet effet un électroaimant (28d) alimenté par une source électrique (28e) lorsque l'interrupteur (28c) est fermé. Un moyen de rappel (29) est prévu pour faire revenir l'électrodistributeur (28) dans sa position (28a) initiale lorsque l'interrupteur (28c) ne ferme plus le circuit d'alimentation électrique de l'électro-aimant (28d). La construction détaillée d'un tel électrodistributeur (28) est connue en soi.

Le distributeur (25) est relié, de façon connue, à la pompe hydraulique (27) et au réservoir (26), lesquels sont généralement, mais de manière non limitative, intégrés, conjointement avec ledit distributeur (25), directement au véhicule tractant la machine agricole conforme à l'invention. L'interrupteur (28c) est également avantageusement placé dans le véhicule tracteur, tandis que l'électrodistributeur (28) est installé sur la machine agricole.

Un exemple de réalisation du mécanisme d'orientation (18) est schématisé sur les figures 4, 5 et 6 dans diverses positions des roues (15).

La tige (21a) du deuxième vérin hydraulique (21) présente, comme dit plus haut, une extrémité constituant un piston (21e) de manière à séparer le cylindre (21b) en deux chambres (21f, 2 1 g) de volume variable en fonction de la position dudit piston (2 1 e). La première chambre (21f) est connectée à la conduite (A) via l'orifice (21d) et la deuxième chambre (21g) est connectée à la conduite (B) via l'orifice (21c).

La chambre (20b) du premier vérin hydraulique (20), quant à elle, est en communication avec la conduite (B) par l'intermédiaire de la conduite (C), en un point de connexion (31). Les conduites (B) et (C), réunies à partir du point de connexion (31), ainsi que la conduite (A) sont connectées à l'électrodistributeur (28). La position (28a) de l'électrodistributeur (28), représentée à la figure 4, est la position de repos dans laquelle l'interrupteur (28c) est ouvert. Dans cette position, l'entrée (e1) est connectée sur les sorties (f1) et (f2), et l'entrée (e2) est condamnée. Comme dit plus haut, l'électrodistributeur (28) communique avec le distributeur (25) par l'intermédiaire des deux conduites (D) et (E). Dans la position représentée à la figure 4, les entrées (el, e2) de l'électrodistributeur (28) sont respectivement en communication avec les sorties (v1, v2) du distributeur (25). Ce dernier est en communication avec la pompe hydraulique (27) et le réservoir (26) au niveau de ses entrées (u1, u2). Dans la première position active (25b) représentée à la figure 4, le distributeur (25) présente deux voies parallèles reliant respectivement les entrées (u1, u2) aux sorties (v1, v2). Une telle position, correspondant à un actionnement donné du levier (25d), permet d'alimenter toutes les chambres (20b, 21f, 2 1 g) des vérins hydrauliques (20, 21).

La machine agricole conforme à l'invention comporte par ailleurs des moyens de verrouillage (30) verrouillant notamment la position des roues (15) parallèle au sens de traction (w) de la machine agricole. Ces moyens de verrouillage (30) sont avantageusement intégrés dans le circuit hydraulique (18b). Les moyens de verrouillage (30) comportent un double clapet piloté (30a) monté sur le deuxième vérin hydraulique (21), de préférence directement sur les orifices (21c, 21d) de celui-ci. Ainsi, le double clapet piloté (30a) demeure ouvert tant qu'une pression de fluide suffisante règne en amont dudit double clapet piloté (30a) dans chacune des conduites (A, B). Le double clapet piloté (30a) permet de verrouiller les roues (15) dans une position parallèle au sens de traction (w) en cas de rupture de l'une des conduites (A, B ou C). Les roues (15) pourraient également être verrouillées dans une position parallèle au sens de traction (w) par l'intermédiaire d'un autre dispositif de blocage du support de roue(s) (14) ou de la (des) roue(s) (15).

La figure 4 représente la machine agricole conforme à l'invention avec l'essieu (13) orienté orthogonalement par rapport au bâti porteur (16). Ceci correspond par exemple à un déplacement en ligne droite ou dans le sens de traction (w) du chariot (10). Une telle orientation de l'essieu (13) est obtenue lorsque le distributeur (25) est placé dans sa première position active (25b) dite "parallèle" (entrées (u1, u2) en communication avec les sorties (v1, v2)) et lorsque l'interrupteur (28c) est ouvert. L'interrupteur (28c) est, de préférence, constitué d'un bouton poussoir de manière à ce que l'ouverture du circuit électrique, et par conséquent la coupure de l'alimentation de l'électro-aimant (28d), soit obtenue par défaut. Dans ce cas de figure, l'électrodistributeur (28) met les conduites (A, B, C) du circuit hydraulique (18b) en communication avec le pompe (27) et isole le réservoir (26). Les conduites (A, B, C) sont alors mises sous pression, ce qui déverrouille le double clapet piloté (30a) et alimente la chambre (20b) du premier vérin hydraulique (20) et les chambres (21f, 21g) du deuxième vérin hydraulique (21). Le premier vérin hydraulique (20) s'allonge au maximum et la tige (20a) vient en butée contre une paroi interne de la chambre (20b). Le deuxième vérin hydraulique (21), de par la différence de section active existant entre ses chambres (2 1 f et 2 1 g), permet alors d'orienter l'essieu (13) de façon appropriée et de mettre les roues (15) dans une position parallèle au sens de traction (w). Le piston (21e) présente une course déterminée par la position parallèle au sens de traction (w) des roues (15) ou par la position correspondante de l'essieu (13). La force exercée sur le piston (21e) dans la première chambre (21f) est supérieure à celle exercée sur le piston (21e) du côté de la deuxième chambre (21g), ce qui permet ainsi de conserver l'orientation donnée de l'essieu (13). En effet, dans la première chambre (21f) la pression s'exerce sur une surface correspondant à une section de cylindre complète, alors que dans la deuxième chambre (21g) la pression s'exerce sur la même surface diminuée de la surface que représente la section de la tige (21a). Dans tous les cas, la chambre (20b) du premier vérin hydraulique (20) présente une section de cylindre supérieure à celle du deuxième vérin hydraulique (21) pour conserver en priorité l'allongement maximal du premier vérin hydraulique (20). Le différentiel de force appliqué au piston (21e) ne permet donc pas de déplacer la tige (20a) du premier vérin hydraulique (20). Le piston (21e) se déplace donc en provoquant le pivotement de l'essieu (13) autour de l'axe (I) pour amener la bielle (22) (ou l'extrémité du premier vérin hydraulique (20)) en appui contre la butée mécanique (23). Cette dernière est, comme dit précédemment, réglable pour ajuster l'orientation de l'essieu (13). Ce réglage est obtenu par tous moyens connus, par exemple à l'aide d'une vis (23a).

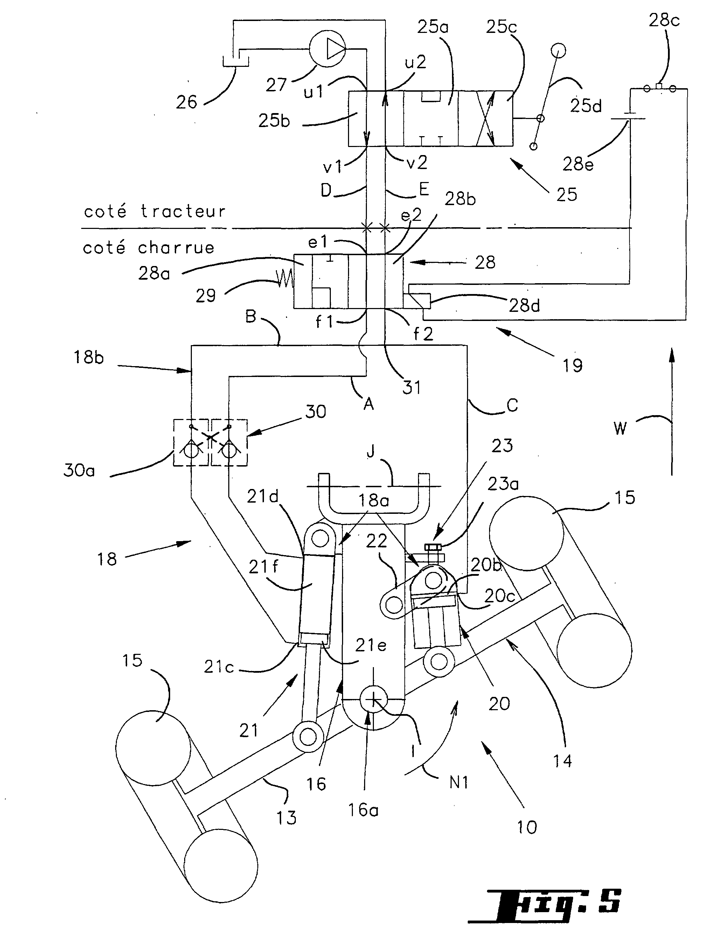

La figure 5 schématise le mécanisme d'orientation (18) lorsque le distributeur (25) est mis dans sa première position active (25b) et lorsque l'interrupteur (28c) est fermé. L'électrodistributeur (28) se trouve alors dans sa position (28b) et présente deux voies parallèles reliant respectivement les entrées (el, e2) aux sorties (f1, f2). Les conduites (B) et (C) sont ainsi reliées directement au réservoir (26), tandis que la pompe (27) alimente la première chambre (21f) du deuxième vérin hydraulique (21) après ouverture du double clapet piloté (30a). Le fluide contenu dans la deuxième chambre (21 g) et dans la chambre (20b) s'écoule vers le réservoir (26) et le remplissage sous pression de la première chambre (21f) permet de pivoter l'essieu (13) autour de l'axe (I) dans le sens (N1). L'amplitude maximale du pivotement est déterminée par le rétrécissement maximal du premier vérin hydraulique (20) et sa venue en appui contre la butée mécanique (23).

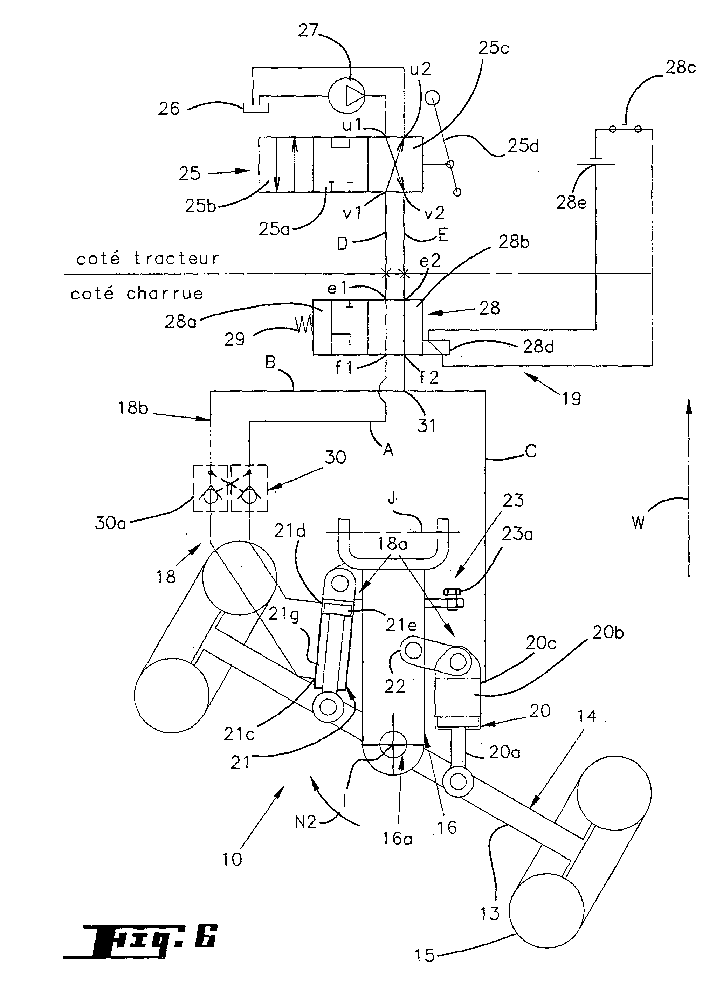

La figure 6 schématise le mécanisme d'orientation (18) lorsque le distributeur (25) est placé dans sa deuxième position active (25c) dite "croisée". Dans cette position, le distributeur (25) présente deux voies croisées reliant l'entrée (u1) sur la sortie (v2) et l'entrée (u2) sur la sortie (v1). L'interrupteur (28c) reste fermé et l'électrodistributeur (28) se trouve donc dans la même position (28b) que dans la figure 5. Un tel positionnement du distributeur (25) et de l'électrodistributeur (28) met les conduites (C) en communication avec la pompe (27), tandis que la conduite (A) est en communication avec le réservoir (26). Les conduites (B, C) sont alors mises sous pression, ce qui déverrouille le double clapet piloté (30a) et alimente la deuxième chambre (21g) du deuxième vérin hydraulique (21) et la chambre (20b) du premier vérin hydraulique (20), provoquant ainsi l'extension maximale du premier vérin hydraulique (20), le pivotement de la bielle (22) et, par conséquent, le pivotement des roues (15) dans le sens (N2). L'amplitude maximale du pivotement de l'essieu (13) est déterminée par le rétrécissement maximal du deuxième vérin hydraulique (21).

Le fonctionnement de la machine agricole conforme à l'invention, en particulier de son mécanisme d'orientation (18), est précisé dans ce qui suit.

Lorsque l'utilisateur veut manoeuvrer l'orientation des roues (15) de la machine agricole, il actionne le levier (25d) et, le cas échéant, l'interrupteur (28c).

Si l'interrupteur (28c) n'est pas fermé, l'électrodistributeur (28) reste, par défaut, dans sa position de repos (28a) (entrée (e1) en communication avec les sorties (f1, f2), entrée (e2) condamnée). Cette position permet, en plaçant le distributeur (25) dans sa première position active (25b), d'alimenter toutes les chambres (20b, 21f, 2 1 g) des vérins hydrauliques (20, 21) via les conduites (A, B, C) de manière à orienter les roues (15) parallèlement au sens de traction (w).

En revanche, lorsque l'utilisateur actionne l'interrupteur (28c), l'électrodistributeur (28) se place dans la position (28b) (entrées (el, e2) respectivement en communication avec les sorties (f1, f2). L'utilisateur peut alors choisir la première position active (25b) ou la deuxième position active (25c) du distributeur (25) avec le levier (25d), tout en maintenant l'interrupteur (28c) fermé. Il peut alors orienter l'essieu (13) pour prendre des virages à droite (position (25b)) et des virages à gauche (position (25c)), facilitant ainsi les manoeuvres en bout de champs, lors du contournement d'obstacles de tout genre ou lors du déplacement sur les chemins ou routes.

En effet, lorsque le distributeur (25) est placé dans sa première position active (25b), l'essieu (13) pivote dans le sens (N1) (figure 5) et lorsque le distributeur (25) est placé dans sa deuxième position active (25c), l'essieu (13) pivote dans le sens (N2) (figure 6).

Une ouverture de l'interrupteur (28c) permet alors à l'électrodistributeur (28) de revenir dans sa position de repos (28a) par défaut.

Lorsque l'essieu (13) est orienté pour prendre des virages à gauche (figure 6), il reste dans cette position tant que le levier (25d) maintient le distributeur (25) dans sa deuxième position active (25c) correspondant au pivotement selon la flèche (N2). Pour faire revenir l'essieu (13) dans son orientation correspondant au déplacement selon le sens de traction (w) (figure 4), il suffit de lâcher l'interrupteur (28c) et d'agir sur le levier (25d) pour placer le distributeur (25) dans sa première position active (25b).

Lorsque l'essieu (13) est orienté pour prendre des virages à droite (figure 5), il reste dans cette position tant que le levier (25d) maintient le distributeur (25) dans sa première position active (25b) correspondant au pivotement selon la flèche (N1). Pour faire revenir l'essieu (13) dans son orientation correspondant au déplacement selon le sens de traction (w) (figure 4), il suffit de lâcher l'interrupteur (28c).

D'autres manipulations que celles précédemment décrites sont inopérantes sur l'orientation des roues (15) ou de l'essieu (13). L'organe de commande (19) est donc particulièrement simple à manipuler et confère à la machine agricole conforme à l'invention un degré élevé de sécurité.

L'absence de manipulation du levier (25d) place par défaut le distributeur (25) dans sa position de repos (25a), ce qui impose à l'utilisateur d'agir à la fois sur l'électrodistributeur (28) et sur le distributeur (25) pour changer l'orientation de l'essieu (13). Une action sur l'électrodistributeur (28) seul est alors inopérante. De la même manière, une action sur le distributeur (25) seul ne permet pas aux roues (15) de prendre une autre orientation que celle parallèle au sens de traction (w) Un actionnement simultané accidentel est très improbable. De façon inattendue, on obtient ainsi une sécurité de fonctionnement très appréciable, en particulier pour le déplacement sur routes.

Le circuit hydraulique (18b) et les moyens hydrauliques (18a) sont donc conçus pour mettre sous pression toutes les chambres (20b, 21f, 21g) des vérins hydrauliques (20, 21) de manière à définir une position de l'essieu (13) correspondant au déplacement selon le sens de traction (w). On obtient ainsi un mécanisme d'orientation (18) de l'essieu (13) rattrapant automatiquement tous les jeux mécaniques de ses diverses articulations. Il est en outre possible de corriger ou d'affiner l'orientation de l'essieu (13) au fil du temps, grâce à la butée mécanique (23) réglable.

La mise en ligne droite de l'essieu (13) peut donc être obtenue de façon extrêmement précise, sans la moindre dérive, même après d'innombrables pivotements dudit essieu (13). La machine agricole conforme à l'invention présente donc des avantages appréciables pour l'utilisateur. L'amélioration de la maniabilité de ladite machine autorise un confort de conduite pour l'utilisateur et conduit à un gain de temps notable lors des manoeuvres.

Tout type de machine agricole semi-portées ou traînées peut être concerné par la présente invention. Elle s'adresse toutefois tout particulièrement aux charrues qu'elles soient du type simple, réversible, à largeur fixe, à largeur réglable ou à largeur variable.

Dans l'exemple qui vient d'être décrit, la machine agricole comporte un chariot (10) muni de deux roues (15) montées sur un essieu (13) rigide constituant un support de roues (14) commun aux deux roues (15).

Il serait cependant parfaitement possible, dans une autre réalisation, que chaque roue (15) soit montée sur son propre support de roue (14).

En outre, les roues (15) pourraient très bien ne pas être montées sur un chariot, mais directement sur le châssis de la machine agricole via leur support de roue. Dans ce cas, la butée mécanique (23) pourrait être solidaire du châssis.

On comprendra enfin que l'invention s'adresse également aux machines agricoles comportant un nombre de roues différent de deux : une roue par exemple comme cela est par exemple connu dans le domaine des charrues.

## Revendications

1. Machine agricole comportant :
- un châssis (1 - 2 - 3 - 4) s'appuyant sur au moins une roue (15), ladite (lesdites) roue(s) (15) étant liée(s) à un support de roue(s) (14) lui-même lié directement au châssis (1 - 2 - 3 - 4) ou via un bâti porteur (16),
- un mécanisme (18) d'orientation de ladite (desdites) roue(s) (15) par rapport au châssis (1 - 2 - 3 - 4), ledit mécanisme d'orientation (18) comprenant des moyens hydrauliques (18a) connectés à un circuit hydraulique (18b) destiné à être alimenté par une source hydraulique (25 - 26 - 27) munie d'au moins un distributeur (25), et
- au moins un organe de commande (19) permettant de piloter le mécanisme d'orientation (18) par l'intermédiaire dudit circuit hydraulique (18b),
***caractérisée en ce* que** les moyens hydrauliques (18a), comprenant au moins un vérin hydraulique (20, 21), coopèrent avec une butée mécanique (23) liée au châssis (1 - 2 - 3 - 4) ou au bâti porteur (16), et qu'un desdits vérins (20, 21) est en appui contre ladite butée mécanique (23) pour déterminer une position de la (des) roue(s) (15) parallèle au sens de traction (w) de la machine agricole durant le transport.

2. Machine agricole selon la revendication 1, ***caractérisée en ce* que** les moyens hydrauliques (18a) comprennent un premier vérin hydraulique (20) articulé entre le support de roue(s) (14) et une bielle (22) montée pivotante sur le châssis (1 - 2 - 3 - 4) ou le bâti porteur (16), et un deuxième vérin hydraulique (21) articulé entre le châssis (1 - 2 - 3 - 4) ou le bâti porteur (16), et le support de roue(s) (14), ledit premier vérin hydraulique (20) étant en appui contre la butée mécanique (23), notamment lorsque ladite (lesdites) roue(s) (15) est (sont) parallèle(s) au sens de traction (w) de la machine agricole.

3. Machine agricole selon la revendication 2, ***caractérisée en ce* que** le premier vérin hydraulique (20) est un vérin simple effet et que le deuxième vérin hydraulique (21) est un vérin double effet.

4. Machine agricole selon la revendication 2 ou 3, ***caractérisée en ce* que** le premier vérin hydraulique (20) est en extension maximale pour déterminer la position de la (des) roue(s) (15) parallèle au sens de traction (w) de la machine agricole.

5. Machine agricole selon l'une quelconque des revendications 2 à 4, ***caractérisée en ce* que** le circuit hydraulique (18b) est conçu pour mettre sous pression toutes les chambres (20b, 21f, 21g) des deux vérins hydrauliques (20, 21) de manière à déterminer la position de la (des) roue(s) (15) parallèle au sens de traction (w) de la machine agricole.

6. Machine agricole selon l'une quelconque des revendications 1 à 5, ***caractérisée en ce* que** ledit (lesdits) organe(s) de commande (19) permet (permettent) à ladite (auxdites) roue(s) (15) de prendre une position différente de la position parallèle au sens de traction (w) de la machine agricole.

7. Machine agricole selon l'une quelconque des revendications 1 à 6, ***caractérisée en ce* que** ledit (lesdits) organe(s) de commande (19) comprend (comprennent) notamment un électrodistributeur (28).

8. Machine agricole selon l'une quelconque des revendications 1 à 7, ***caractérisée en ce* qu'**elle comporte des moyens de verrouillage (30) verrouillant la position de la (des) roue(s) (15) parallèle au sens de traction (w) de la machine agricole.

9. Machine agricole selon la revendication 8, ***caractérisée en ce* que** lesdits moyens de verrouillage (30) sont intégrés dans le circuit hydraulique (18b).

10. Machine agricole selon les revendications 3 et 9, ***caractérisée en ce* que** lesdits moyens de verrouillage (30) comportent un double clapet piloté (30a) monté sur le deuxième vérin hydraulique (20).

11. Machine agricole selon l'une quelconque des revendications 1 à 10, ***caractérisée en ce* que** la butée mécanique (23) solidaire du châssis (1 - 2 - 3 - 4) ou du bâti porteur (16), est une butée réglable pour ajuster la position de la (des) roues(s) (15) parallèle au sens de traction (w) de la machine agricole.

12. Machine agricole selon l'une quelconque des revendications 1 à 11, ***caractérisée en ce* qu'**elle comporte deux roues (15).

13. Machine agricole selon la revendication 12, ***caractérisée en ce* que** les deux roues (15) sont montées sur un essieu (13) rigide constituant le support de roues (14).

14. Machine agricole selon la revendication 12 ou 13, ***caractérisée en ce* que** le bâti porteur (16), le support de roue(s) (14) et les deux roues (15) constituent un chariot (10).

15. Machine agricole selon l'une quelconque des revendications 1 à 14, ***caractérisée en ce* qu'**elle constitue une charrue simple ou réversible, à largeur variable, réglable ou non.

## Claims

1. Agricultural machine comprising:
- a chassis (1 - 2 - 3 - 4) resting on at least one wheel (15), the said wheel(s) (15) being connected to a wheel support ( 14) itself connected either directly to the chassis (1 - 2 - 3 - 4) or via a supporting framework (16),
- a mechanism (18) for orientating the said wheel(s) (15) with respect to the chassis (1 - 2 - 3 - 4), the said orientation mechanism (18) comprising hydraulic means (18a) connected to a hydraulic circuit (18b) intended to be supplied by a hydraulic source (25 - 26 - 27) equipped with at least one directional control valve (25), and
- at least one control member (19) allowing the orientation mechanism (18) to be driven via the said hydraulic circuit (18b),
***characterized in* that** the hydraulic means (18a) comprising at least one hydraulic ram (20, 21) cooperate with a mechanical stop (23) connected to the chassis (1 - 2 - 3 - 4) or to the supporting frame (16), and **in that** one of the said rams (20, 21) rests against the said mechanical stop (23) to determine a position of the wheel(s) (15) parallel to the direction (w) in which the agricultural machine is towed during transport.

2. Agricultural machine according to Claim 1, ***characterized in* that** the hydraulic means (18a) comprise a first hydraulic ram (20) articulated between the wheel support (14) and a link rod (22) mounted to pivot on the chassis (1 - 2 - 3 - 4) or the supporting framework (16), and a second hydraulic ram (21) articulated between the chassis (1 - 2 - 3 - 4) or the supporting framework (16) and the wheel support (14), the said first hydraulic ram (20) resting against the mechanical stop (23) particularly when the said wheel(s) (15) is (are) parallel to the direction (w) in which the agricultural machine is towed.

3. Agricultural machine according to Claim 2, ***characterized in* that** the first hydraulic ram (20) is a single-acting ram and **in that** the second hydraulic ram (21) is a double-acting ram.

4. Agricultural machine according to Claim 2 or 3, ***characterized in* that** the first hydraulic ram (20) is in maximum extension to determine the position of the wheel(s) (15) parallel to the direction (w) in which the agricultural machine is towed.

5. Agricultural machine according to any one of Claims 2 to 4, ***characterized in* that** the hydraulic circuit (18b) is designed to pressurize all the chambers (20b, 21f, 21g) of the two hydraulic rams (20, 21) so as to determine the position of the wheel(s) (15) parallel to the direction (w) in which the agricultural machine is towed.

6. Agricultural machine according to any one of Claims 1 to 5, ***characterized in* that** the said control member(s) (19) allows (allow) the said wheel(s) (15) to adopt a position other than the position parallel to the direction (w) in which the agricultural machine is towed.

7. Agricultural machine according to any one of Claims 1 to 6, ***characterized in* that** the said control member(s) (19) comprises (comprise) in particular, an electrically-operated directional control valve (28).

8. Agricultural machine according to any one of Claims 1 to 7, ***characterized in* that** it comprises locking means (30) locking the position of the wheel(s) (15) parallel to the direction (w) in which the agricultural machine is towed.

9. Agricultural machine according to Claim 8, ***characterized in* that** the said locking means (30) are incorporated into the hydraulic circuit (18b).

10. Agricultural machine according to Claims 3 and 9, ***characterized in* that** the said locking means (30) comprise a driven double valve (30a) mounted on the second hydraulic ram (20).

11. Agricultural machine according to any one of Claims 1 to 10, ***characterized in* that** the mechanical stop (23) secured to the chassis (1 - 2 - 3 - 4) or to the supporting frame (16) is an adjustable stop to adjust the position of the wheel(s) (15) parallel to the direction (w) in which the agricultural machine is towed.

12. Agricultural machine according to any one of Claims 1 to 11, ***characterized in* that** it has two wheels (15).

13. Agricultural machine according to Claim 12, ***characterized in* that** the two wheels (15) are mounted on a rigid axle (13) constituting the wheel support (14).

14. Agricultural machine according to Claim 12 or 13, ***characterized in* that** the supporting frame (16), the wheel support (14) and the two wheels (15) constitute a carriage (10).

15. Agricultural machine according to any one of Claims 1 to 14, ***characterized in* that** it constitutes a simple or a reversible plough, of variable width, that may or may not be adjustable.

## Patentansprüche

1. Landwirtschaftliche Maschine, die
- ein Gestell (1 - 2 - 3 - 4), das sich auf mindestens ein Rad (15) stützt, wobei das (die) Rad (Räder) (15) mit einer Radstütze (14) verbunden ist (sind), die ihrerseits direkt oder über einen Tragrahmen (16) mit dem Gestell (1 - 2 - 3 - 4) verbunden ist,
- einen Mechanismus (18) zur Ausrichtung des (der) Rads (Räder) bezüglich des Gestells (1 - 2 - 3 - 4), wobei der Ausrichtungsmechanismus (18) hydraulische Mittel (18a) umfasst, die mit einem Hydraulikkreis (18b) verbunden sind, der durch eine mit mindestens einem Verteiler (25) versehene Hydraulikquelle (25 - 26 - 27) versorgt werden soll, und
- mindestens ein Steuerglied (19), das es gestattet, den Ausrichtungsmechanismus (18) mittels des Hydraulikkreises (18b) zu steuern,
umfasst, ***dadurch gekennzeichnet,* dass** die hydraulischen Mittel (18a), die mindestens einen Hydraulikzylinder (20, 21) umfassen, mit einem mechanischen Anschlag (23) zusammenwirken, der mit dem Gestell (1 - 2 - 3 - 4) oder dem Tragrahmen (16) verbunden ist, und dass einer der Zylinder (20, 21) an dem mechanischen Anschlag (23) anliegt, um eine zur Zugrichtung (w) der landwirtschaftlichen Maschine beim Transport parallele Position des (der) Rads (Räder) festzulegen.

2. Landwirtschaftliche Maschine nach Anspruch 1, ***dadurch gekennzeichnet,* dass** die hydraulischen Mittel (18a) einen zwischen der Radstütze (14) und einer schwenkbar an dem Gestell (1 - 2 - 3 - 4) oder dem Tragrahmen (16) angebrachten Verbindungsstange (22) angelenkten ersten Hydraulikzylinder (20) und einen zwischen dem Gestell (1 - 2 - 3 - 4) oder dem Tragrahmen (16) und der Radstütze (14) angelenkten zweiten Hydraulikzylinder (21) umfassen, wobei der erste Hydraulikzylinder (20) an dem mechanischen Anschlag (23) anliegt, insbesondere, wenn sich (das) (die) Rad (Räder) (15) parallel zur Zugrichtung (w) der landwirtschaftlichen Maschine befindet (befinden).

3. Landwirtschaftliche Maschine nach Anspruch 2, ***dadurch gekennzeichnet,* dass** der erste Hydraulikzylinder (20) ein einfachwirkender Zylinder ist und dass der zweite Hydraulikzylinder (21) ein doppeltwirkender Zylinder ist.

4. Landwirtschaftliche Maschine nach Anspruch 2 oder 3, ***dadurch gekennzeichnet,* dass** der erste Hydraulikzylinder (20) maximal ausgefahren ist, um die Position des (der) Rads (Räder) (15) parallel zur Zugrichtung (w) der landwirtschaftlichen Maschine festzulegen.

5. Landwirtschaftliche Maschine nach irgend einem der Ansprüche 2 bis 4, ***dadurch gekennzeichnet,* dass** der Hydraulikkreis (18b) so konzipiert ist, dass er alle Kammern (20b, 21f, 21g) der beiden Hydraulikzylinder (20, 21) unter Druck setzt, um die Position des (der) Rads (Räder) (15) parallel zur Zugrichtung (w) der landwirtschaftlichen Maschine festzulegen.

6. Landwirtschaftliche Maschine nach irgend einem der Ansprüche 1 bis 5, ***dadurch gekennzeichnet,* dass** das (die) Steuerglied(er) (19) es dem (den) Rad (Rädern) (15) gestattet (gestatten), eine von der sich parallel zur Zugrichtung (w) der landwirtschaftlichen Maschine befindenden Position verschiedene Position einzunehmen.

7. Landwirtschaftliche Maschine nach irgend einem der Ansprüche 1 bis 6, ***dadurch gekennzeichnet,* dass** das (die) Steuerglied(er) (19) insbesondere ein Magnetventil (28) umfasst (umfassen).

8. Landwirtschaftliche Maschine nach irgend einem der Ansprüche 1 bis 7, ***dadurch gekennzeichnet,* dass** sie Verriegelungsmittel (30) umfasst, die die Position des (der) Rads (Räder) (15) parallel zur Zugrichtung (w) der landwirtschaftlichen Maschine verriegeln.

9. Landwirtschaftliche Maschine nach Anspruch 8, ***dadurch gekennzeichnet,* dass** die Verriegelungsmittel (30) in dem Hydraulikkreis (18b) integriert sind.

10. Landwirtschaftliche Maschine nach den Ansprüchen 3 und 9, ***dadurch gekennzeichnet,* dass** die Verriegelungsmittel (30) ein gesteuertes Doppelventil (30a) umfassen, das an dem zweiten Hydraulikzylinder (20) angebracht ist.

11. Landwirtschaftliche Maschine nach irgend einem der Ansprüche 1 bis 10, ***dadurch gekennzeichnet,* dass** der fest mit dem Gestell (1 - 2 - 3 - 4) oder dem Tragrahmen (16) verbundene mechanische Anschlag (23) ein verstellbarer Anschlag zur Einstellung der Position des (der) Rads (Räder) (15) parallel zur Zugrichtung (w) der landwirtschaftlichen Maschine ist.

12. Landwirtschaftliche Maschine nach irgend einem der Ansprüche 1 bis 11, ***dadurch gekennzeichnet,* dass** sie zwei Räder (15) aufweist.

13. Landwirtschaftliche Maschine nach Anspruch 12, ***dadurch gekennzeichnet,* dass** die beiden Räder (15) an einer starren Radachse (13) angebracht sind, die die Radstütze (14) bildet.

14. Landwirtschaftliche Maschine nach Anspruch 12 oder 13, ***dadurch gekennzeichnet,* dass** der Tragrahmen (16), die Radstütze (14) und die beiden Räder (15) ein Fahrwerk (10) bilden.

15. Landwirtschaftliche Maschine nach irgend einem der Ansprüche 1 bis 14, ***dadurch gekennzeichnet,* dass** sie einen Beet- oder Drehpflug mit variabler, gegebenenfalls einstellbarer, Schnittbreite bildet.
